# EUROPÄISCHE PATENTSCHRIFT

(11) **EP 3 411 239 B1**
(45) Veröffentlichungstag und Bekanntmachung des Hinweises auf die Patenterteilung: **17.03.2021**
(21) Anmeldenummer: 16809791.3
(22) Anmeldetag: 09.12.2016
(51) Int. Cl.: B41J 3/407, B29C 49/42, G06K 17/00

(54) **DRUCKMASCHINE ZUM BEDRUCKEN VON BEHÄLTERN**
PRINTING MACHINE FOR PRINTING ON CONTAINERS
MACHINE D'IMPRESSION DESTINÉE À L'IMPRESSION SUR DES RÉCIPIENTS

(30) Priorität: 05.02.2016 DE 102016102040
(43) Veröffentlichungstag der Anmeldung: 12.12.2018
(73) Patentinhaber: Krones AG, 93073 Neutraubling (DE)
(72) Erfinder: OESTREICHER, Thomas, 93073 Neutraubling (DE); AUGST, Peggy, 93073 Neutraubling (DE)
(74) Vertreter: Grünecker Patent- und Rechtsanwälte PartG mbB
(86) Internationale Anmeldenummer: PCT/EP2016/080392
(87) Internationale Veröffentlichungsnummer: WO 2017/133815

(56) Entgegenhaltungen:
- EP-A2- 2 835 248
- DE-A1-102005 041 221
- DE-A1-102010 036 029
- DE-U1-202013 011 695
- FR-A1- 3 001 912
- JP-A- 2007 175 994
- US-A1- 2005 068 182
- US-A1- 2008 265 461
- US-A1- 2014 033 654

## Beschreibung

Die vorliegende Erfindung betrifft eine Druckmaschine zum Bedrucken von Vorformlingen sowie ein Verfahren zum Behandeln eines Vorformlings in der getränkeverarbeitenden Industrie.

### Stand der Technik

Druckmaschinen, die zum Aufbringen von Druckbildern auf Etiketten oder Behälter in der getränkeverarbeitenden Industrie genutzt werden, sind hinlänglich bekannt. Auch das Aufbringen von zusätzlichen Komponenten, wie RFID-Transpondern, auf Etiketten ist bekannt.

So zeigt die WO 2007/025591 das Aufdrucken eines RFID-Transponders auf ein Etikett oder ein Trägermedium. Weiterhin kann zumindest ein Teil des RFID-Transponders auf die Oberfläche des Behälters aufgedruckt werden.

Auch die DE 20 2013 011 695 U1 zeigt eine Streckblasmaschine mit einer Druckeinrichtung, mit der ein Smartlabel oder zumindest Teile davon auf den ausgeformten Behälter aufgebracht werden können Die EP2835248 A2, US2014/033654 A1 und DE102010036029 A1 zeigen das Bedrucken von Vorformlingen mittels einer Direktdruckmaschine.

Mit den aufgebrachten Transpondern oder Etiketten oder gedruckten Elementen ist eine Verfolgung der entsprechenden Behälter möglich, sodass beispielsweise die weitere Prozessführung damit gesteuert werden kann.

Die bisherigen Verfahren und Vorrichtungen erlauben eine Verfolgung der Behandlung des Behälters erst ab einem Zeitpunkt, zu dem die Behandlung des Behälters bereits sehr weit fortgeschritten ist.

### Aufgabe

Ausgehend vom bekannten Stand der Technik besteht die zu lösende Aufgabe somit darin, eine Vorrichtung und ein Verfahren anzugeben, mit dem die Behandlung von Behältern in der getränkeverarbeitenden Industrie möglichst lückenlos verfolgt und gezielt gesteuert werden kann.

### Lösung

Diese Aufgabe wird durch die Druckmaschine zum Bedrucken von Vorformlingen gemäß Anspruch 1 und das Verfahren zum Behandeln eines Vorformlings gemäß Anspruch 8 gelöst. Vorteilhafte Weiterbildungen der Erfindung sind in den Unteransprüchen erfasst.

Die erfindungsgemäße Druckmaschine zum Bedrucken von Vorformlingen in der getränkeverarbeitenden Industrie umfasst ein Druckmodul, das ausgebildet ist, wenigstens eine Komponente eines elektronischen Bauteils auf eine Oberfläche des Vorformlings im Bereich des Tragrings des Vorformlings aufzubringen.

Dabei ist unter der Oberfläche im Bereich des Tragrings der Teil des Vorformlings zu verstehen, der sich bei weiteren Behandlungsschritten, insbesondere dem Ausformen des Vorformlings zu einem Behälter, nur wenig, bevorzugt gar nicht ändert. Die Oberfläche im Bereich des Tragrings kann die gesamte Oberfläche des Tragrings selbst sein oder diese umfassen. So kann die Komponente auf eine in Richtung der Öffnung des Vorformlings weisende Oberfläche des Tragrings oder auf die dieser Oberfläche gegenüberliegende Oberfläche des Tragrings gedruckt werden. Die Komponente kann auch auf die Mantelfläche (die Fläche, die die besagten, gegenüberliegenden Flächen des Tragrings verbindet) des Tragrings gedruckt werden. Die Oberfläche im Bereich des Tragrings kann weiterhin ein Bereich sein oder einen Bereich umfassen, der sich vom Tragring aus in Richtung des Bodens des Vorformlings erstreckt. Dieser Bereich kann eine Oberfläche oder einen Teil einer Oberfläche des Vorformlings umfassen, die an der von der Öffnung des Vorformlings wegweisenden Oberfläche des Tragrings beginnt und sich in Richtung des Bodens 1mm, 2mm, 5mm, 1cm oder bis zu 2cm weit erstreckt. Der Bereich muss sich nicht unmittelbar an die von der Öffnung des Vorformlings wegweisende Oberfläche des Tragrings anschließen, sondern kann zu dieser auch einen Abstand von 0,5mm, 1mm oder bis zu 5mm aufweisen.

Ferner kann der Bereich des Tragrings das Gewinde oder ein Teil des Gewindes sein oder diese umfassen, sodass die Komponente auf das Gewinde des Vorformlings aufgebracht wird. Auch dieser Bereich verformt sich beim Ausformen des Vorformlings zum Behälter nicht oder nur geringfügig. Im Gegensatz zu dem Teil des Vorformlings, der sich in Richtung des Bodens erstreckt (der zum Behälterkörper ausgeformt werden kann) verformt sich der Bereich des Gewindes während eines Blasformvorgangs gar nicht oder höchstens geringfügig, sodass das gesamte Gewinde, auch dessen Innenseite (die Seite des Gewindebereichs, die sich innerhalb des Behälters befindet), zum Aufbringen der Komponente genutzt werden kann.

Bei der Komponente des elektronischen Bauteils kann es sich um jegliche in elektronischen Bauteilen enthaltene Komponenten handeln, insbesondere Speichermedien (Speicherfilme), Strom- und Spannungsquellen, wie Kondensatoren oder Akkumulatoren, Prozessoren, Empfangs- und Sendeeinheiten für Daten, insbesondere RF-Sender, Antennen und ähnliches. Insbesondere kann es sich bei der Komponente um eine Komponente eines RFID-Transponders, insbesondere Speicher, Antenne, Leiterbahnen, analoge oder digitale Schaltkreise handeln. Auch ein vollständiges elektronisches Bauteil, insbesondere ein vollständiger RFID-Transponder kann auf den Vorformling aufgedruckt werden.

Durch Aufbringen der Komponente bereits auf den Vorformling kann nahezu die gesamte Behandlung des Vorformlings und des daraus hergestellten Behälters überwacht werden. Da die Komponente in einem Bereich angebracht wird, der sich weniger stark beim Verformen des Vorformlings zum Behälter ändert, als beispielsweise die Mantelfläche oder der Boden des Vorformlings, bleibt die Komponente auch nach dem Verformen des Vorformlings zum Behälter funktionsfähig.

In einer Ausführungsform ist vorgesehen, dass das Druckmodul ausgebildet ist, die Komponente mittels kontaktlosem Druck, Kontaktdruck oder einer Kombination dieser aufzubringen. Diese Möglichkeiten zum Bedrucken des Vorformlings können je nach Art und Weise des Transports der Vorformlinge in der Druckmaschine vorteilhaft sein.

Weiterhin kann vorgesehen sein, dass die Druckmaschine zum Bedrucken der Komponente wenigstens ein digitales Druckmodul (beispielsweise ein Inkjet-Modul oder jegliche, gemäß dem Drop-on-Demand-Prinzip arbeitende Module), ein Siebdruck-Modul, ein Flexodruck-Modul oder ein Roll-to-roll-Druckmodul umfasst. Die Druckmodule können genutzt werden, um beispielsweise bestimmte Anforderungen an die Komponente zu realisieren.

Ferner kann vorgesehen sein, dass die Druckmaschine Teil einer Behälterbehandlungsmaschine mit einem Behandlungsabschnitt, in dem Vorformlinge behandelt werden können, ist. Die Druckmaschine kann so in Prozesse, in denen Vorformlinge behandelt werden, integriert werden. Beispielsweise kann die Druckmaschine in einer Blasformmaschine integriert sein, sodass eine aufgebrachte Komponente in der Blasformmaschine erwärmt und so beispielsweise getrocknet werden kann.

In einer Weiterbildung dieser Ausführungsform ist vorgesehen, dass die Druckmaschine stromauf oder stromab des Behandlungsabschnitts angeordnet ist. Je nachdem wie die Komponente beispielsweise zur Weiterverfolgung der Behandlung des Behälters genutzt werden soll, kann die Anordnung der Druckmaschine vor dem Behandlungsabschnitt, aber auch nach dem Behandlungsabschnitt vorteilhaft sein.

Weiterhin kann vorgesehen sein, dass die Behälterbehandlungsmaschine als Vorformlingzuführung ausgebildet ist, die Vorformlinge bereitstellt, und/oder wobei die Druckmaschine ausgebildet ist, die wenigstens eine Komponente auf die Oberfläche des Tragrings und/oder auf einen Bereich, der sich unterhalb des Tragrings höchstens 1 cm in Richtung des Bodens des Vorformling erstreckt, und/oder auf das Gewinde des Vorformlings aufzubringen. Wird die Komponente bereits im Bereich einer Vorformlingzuführung auf die Vorformlinge aufgebracht, so kann praktisch die gesamte Behandlung der Vorformlinge und der späteren Behälter mit der Komponente verfolgt werden. Das Aufbringen der Komponente auf der Oberfläche des Tragrings oder in dem beschriebenen Bereich unterhalb des Tragrings stellt sicher, dass auch in folgenden Behandlungsschritten keine Deformation und damit möglicherweise Beschädigung der Komponente erfolgt.

In einer Ausführungsform ist vorgesehen, dass stromab des Druckmoduls eine Trocknungseinheit zum Trocknen aufgebrachter Drucktinte und/oder stromauf des Druckmoduls ein Druckmodul zum Aufbringen einer Basisschicht zumindest im Bereich der Komponente auf den Vorformling und/oder stromab des Druckmoduls ein Druckmodul zum Aufbringen einer Deckschicht zumindest im Bereich der Komponente auf den Vorformling angeordnet ist. Das Aufbringen einer Basisschicht kann die Haftung der Komponente an dem Vorformling verbessern. Die Deckschicht wiederum kann die Komponente vor unerwünschten Umwelteinflüssen, wie beispielsweise Feuchtigkeit oder chemischen Reaktionen schützen.

Das erfindungsgemäße Verfahren zum Behandeln eines Vorformlings in der getränkeverarbeitenden Industrie umfasst, dass eine Komponente eines elektronischen Bauteils durch eine Druckmaschine auf die Oberfläche des Vorformlings im Bereich des Tragrings des Vorformlings aufgebracht wird. Mit diesem Verfahren ist eine weitere Verfolgung sowie Identifikation des Vorformlings und des später ausgebildeten Behälters durch nahezu alle Behandlungsschritte möglich.

Es kann ferner vorgesehen sein, dass die Komponente auf die Oberfläche des Tragrings und/oder auf einen Bereich, der sich unterhalb des Tragrings höchstens 1 cm in Richtung des Bodens des Vorformlings erstreckt, aufgebracht wird. Da sich diese Bereiche auch beim Verformen des Vorformlings zu einem Behälter nur wenig ändern, kann sichergestellt werden, dass die Komponente auch bei Durchlaufen weiterer Behandlungsschritte funktionsfähig bleibt.

In einer Ausführungsform wird die Komponente durch kontaktlosen Druck oder Kontaktdruck oder eine Kombination dieser auf den Vorformling aufgebracht. Abhängig vom Transport der Vorformlinge oder von anderen Umständen kann die Wahl dieser Verfahren zum Aufdrucken der Komponente vorteilhaft sein.

In einer weiteren Ausführungsform ist vorgesehen, dass der Vorformling vor oder nach dem Aufbringen der Komponente wenigstens einen weiteren Behandlungsschritt durchläuft.

In einer Weiterbildung dieser Ausführungsform ist vorgesehen, dass der weitere Behandlungsschritt eines von Blasformen, Formfüllen, Füllen, Etikettieren, mit einem Druckbild Bedrucken, Verschließen, Verpacken umfasst. Da die Komponente des elektronischen Bauteils in einem Bereich des Vorformlings aufgebracht wird, der während der gesamten Prozessführung nur geringe bis gar keine Veränderung erfährt, können sämtliche beschriebenen Prozesse auch mit der Komponente durchgeführt werden, was insbesondere die Nachverfolgung des Vorformlings und/oder des daraus hergestellten Behälters vereinfacht.

In einer Ausführungsform umfasst die Komponente wenigstens eine Antenne, einen Chip, einen Speicher oder eine Diode. Diese Komponenten können für verschiedene Anwendungen genutzt werden.

Weiterhin kann vorgesehen sein, dass die Komponente einen Speicher umfasst und in dem Speicher auslesbare Daten gespeichert sind, die weitere, an dem Behälter durchzuführende Behandlungsschritte definieren. Wird dieser Speicher von geeigneten Einrichtungen ausgelesen, kann die sich anschließende Behandlung des Behälters basierend auf den in dem Speicher gespeicherten Daten erfolgen, was eine Individualisierung der Behälterbehandlung ermöglicht.

Weiterhin kann vorgesehen sein, dass die Komponente einen Speicher umfasst, in dem während und/oder nach wenigstens einem weiteren Behandlungsschritt, der an dem Behälter durchgeführt wird, Daten gespeichert werden, die indikativ für wenigstens einen Prozessparameter während des Behandlungsschritts und/oder wenigstens einen nachfolgenden Behandlungsschritt sind. Mittels dieser gespeicherten Daten kann später die Behandlung jedes einzelnen Behälters zurückverfolgt werden, was insbesondere bei Störungen während der Behälterbehandlung vorteilhaft sein kann. Ferner können mit Hilfe dieser gespeicherten Daten Behandlungsschritte innerhalb des gesamten Prozesses geregelt/gesteuert werden. Beispielsweise kann aufgrund eines fehlerhaften Füllstandes das entsprechende Füllventil nachgeregelt werden. Dies kann beispielsweise derart erfolgen, dass die Daten der Füllstandshöhe auf der Komponente des zu behandelnden/betroffenen Behälters gespeichert werden, an einer darauffolgenden Station ausgelesen und mit einem abgespeicherten Referenzwert in einer Hauptsteuerung der Behälterbehandlungsmaschine oder -anlage verglichen werden. Weitere Stationen, wie die Blasformen, Etikettierstationen, Verschließer (z.B. Schraubköpfe) können auf diese Art und Weise geregelt/gesteuert werden.

### Kurze Beschreibung der Figuren

- Figur 1: zeigt eine Druckmaschine gemäß einer Ausführungsform der Erfindung,
- Figuren 2a+b: zeigen unterschiedliche Ausführungsformen von mit der Komponente bedruckten Vorformlingen,
- Figuren 3a+b: zeigen eine Ausführungsform mit einer stromauf einer Behälterbehandlungsmaschine vorgesehenen Druckmaschine (Figur 3a) und eine Ausführungsform mit einer stromab einer Behälterbehandlungsmaschine vorgesehenen Druckmaschine (Figur 3b),
- Figur 4: zeigt Ausführungsformen zum Aufbringen einer Basisschicht und einer Deckschicht sowie eine Trocknungseinheit.

### Ausführliche Beschreibung

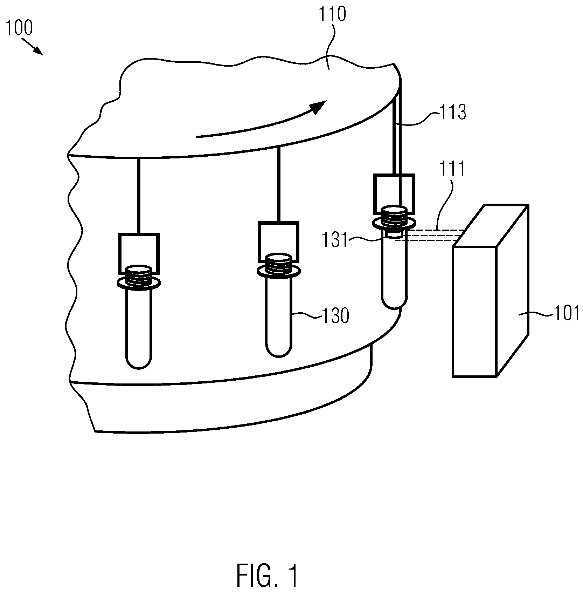

Figur 1 zeigt eine Ausführungsform einer Druckmaschine 100 zum Bedrucken von Vorformlingen 130. Die Druckmaschine 100 ist in dieser Ausführungsform als Karussell 110 ausgebildet. An der Peripherie des Karussells können mehrere Aufnahmen 113 zum Aufnehmen von Vorformlingen 130 angeordnet sein. Die Aufnahmen können als Klammern, die den Tragring eines Vorformlings umgreifen, ausgebildet sein. Alternativ können die Aufnahmen 113 die Vorformlinge auch in ihrem Kopfbereich, in dem üblicherweise ein Gewinde für einen später aufzubringenden Verschluss vorhanden ist, greifen. Auch andere Ausführungsformen der Aufnahmen 113, beispielsweise mittels Zentrierglocken, Innengreifer und/oder Aufnahmetellern sind denkbar. Ebenso ist die Ausführungsform der Druckmaschine mit einem Karussell nicht zwingend. Es können auch andere Ausführungsformen, insbesondere eine linear arbeitende Maschine vorgesehen sein.

Weiterhin ist in dieser Ausführungsform im Bereich des Karussells 110 ein Druckmodul 101 vorgesehen, das die Vorformlinge in den Aufnahmen 113 bedrucken kann. Dabei ist erfindungsgemäß vorgesehen, dass das Druckmodul 101 zumindest eine Komponente eines elektronischen Bauteils 131 (insbesondere eine Komponente eines RFID-Transponders) auf die Oberfläche des Vorformlings im Bereich des Tragrings aufbringen kann. Die dazu verwendete Drucktinte 111 kann dabei beispielsweise metallische Partikel umfassen. Auch das Aufbringen dünner Schichten aus Legierungen, die Metalle und/oder seltene Erden umfassen, sind denkbar. Ferner kann die Drucktinte auch Kunststoffpartikel umfassen. Ebenso denkbar ist das Aufdrucken von leitfähigen und/oder magnetischen Nanopartikeln oder Nanoröhren. Die Materialien können silberbasiert sein oder Silber umfassen. Ebenso können Kohlenstoffverbindungen, insbesondere bei auf Nanopartikeln oder Nanoröhren basierenden Tinten, zum Einsatz kommen.

In der in Figur 1 dargestellten Ausführungsform erfolgt das Aufdrucken der Komponente 131 kontaktlos. Das bedeutet, dass das Druckmodul die Drucktinte 111 zum Ausbilden der Komponente 131 auf dem Vorformling 130 aufbringt, ohne dass das Druckmodul 101 mit der Oberfläche des Vorformlings 130 in Berührung kommt.

Alternativ dazu kann auch vorgesehen sein, dass die Komponente mittels Kontaktdruck aufgebracht wird. Für den Fall, dass mehrere Komponenten des elektronischen Bauteils auf den Vorformling aufgebracht werden sollen, können mehrere Druckmodule vorgesehen sein, wobei jedes der Druckmodule eine Komponente mit kontaktlosem Druck und/oder mit Kontaktdruck auf den Vorformling aufbringt. Da die aufzubringenden Strukturen, insbesondere Leiterbahnen oder Komponenten, die einen Speicher oder eine Antenne bilden, sehr klein sind, sind Druckmodule bevorzugt, die als digitale Druckmodule, insbesondere Inkjet-Druckmodule ausgebildet sind. Diese eignen sich insbesondere für den kontaktlosen Druck. Ferner können auch Siebdruck-Module zum Einsatz kommen. Alternativ oder zusätzlich können Flexodruck-Module oder Roll-to-Roll-Module verwendet werden, die insbesondere für den Kontaktdruck geeignet sind.

Da die Vorformlinge üblicherweise in weiteren Prozessschritten zu Behältern ausgeformt werden und anschließend zusätzliche Prozessschritte, wie beispielsweise Füllen oder Verschließen oder Etikettieren der Behälter vorgenommen werden, ist es bevorzugt, wenn die Komponente 131 auf die Oberfläche des Vorformlings in einem Bereich aufgebracht wird, der insbesondere bei nachfolgenden Verformungen des Vorformlings nicht verändert wird. Dies betrifft gerade Bereiche am und um den bei den Vorformlingen vorhandenen Tragring.

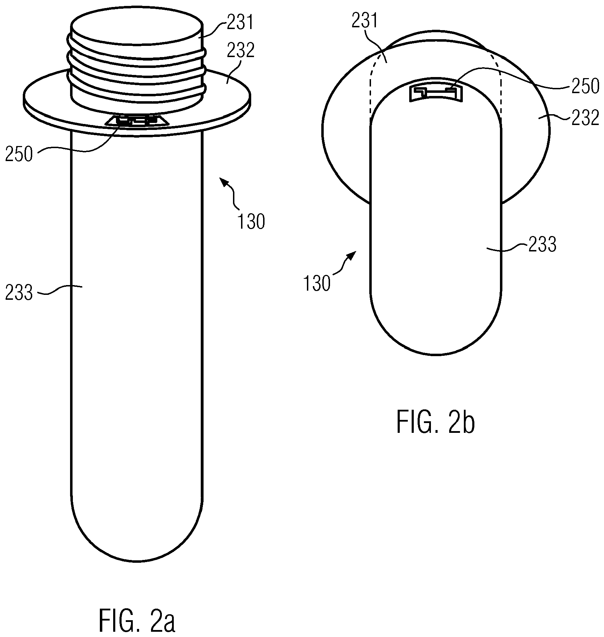

Hierzu zeigen Figuren 2a und 2b mögliche Ausführungsformen hinsichtlich des Aufdruckens der Komponente 131 (in den Figuren 2a und 2b mit 250 bezeichnet). In Figur 2a ist ein Vorformling 130, umfassend einen Kopfbereich 231, gegebenenfalls mit einem Gewinde, einen Tragring 232, der sich an den Kopfbereich anschließt, sowie einen Körper 233, der sich auf der dem Kopfbereich gegenüberliegenden Seite des Tragrings erstreckt, gezeigt.

In dieser Ausführungsform ist vorgesehen, dass das in Figur 1 dargestellt Druckmodul 101 die Komponente 250 auf eine Oberfläche des Tragrings 232 aufbringt. In der dargestellten Ausführungsform ist dies die in Richtung des Kopfbereichs weisende Oberfläche des Tragrings. Alternativ kann auch vorgesehen sein, dass die Komponente 250 auf der vom Kopfbereich wegweisenden, bzw. in Richtung des Körpers 233 weisenden Oberfläche des Tragrings aufgebracht wird. Je nach Größe der Komponente 250 kann diese auch auf den üblicherweise 1 bis 2 mm breiten Rand des Tragrings aufgebracht werden.

Figur 2b zeigt eine alternative Ausführungsform, bei der die Komponente 250 auf den Körper 233 des Vorformlings 130 aufgebracht wird. Dies erfolgt in einem Bereich des Körpers 233, der sich unmittelbar an den Tragring 232 anschließt. Bevorzugt wird die Komponente 250 in einem Bereich unterhalb des Tragrings aufgedruckt, der sich höchstens 2 cm von der unteren Oberfläche des Tragrings 232 in Richtung des Bodens des Vorformlings 130 erstreckt. Dieser Bereich, der bei einem ausgeformten Behälter üblicherweise den Flaschenhals bildet, verformt sich beim Ausformen des Vorformlings zu einem Behälter nur wenig, sodass die Komponente 250 nur geringen Belastungen während der weiteren Behandlung des Vorformlings ausgesetzt ist.

Grundsätzlich kann die Komponente 250 jede Komponente eines elektronischen Bauteils sein. Dazu zählen insbesondere Antennen und Speicher, aber auch Leiterbahnen, Energiespeicher, hier insbesondere Akkumulatoren und Kondensatoren, und analoge oder digitale Schaltkreise bzw. Prozessoren. Insbesondere kann es sich bei dem elektronischen Bauteil um einen RFID-Transponder handeln und die Komponente kann eine Komponente des RFID-Transponders sein. Da die notwendige Genauigkeit zum Aufdrucken von Leiterbahnen erheblich größer ist als die notwendige Genauigkeit zum Aufdrucken einer Antenne oder eines Speicherfilms, insbesondere eines magnetischen Speicherfilms, kann es bevorzugt sein, wenn die Komponente 250 eine Antenne oder einen Speicher umfasst. Ferner kann die Komponente 250 als Akkumulator, insbesondere als Kondensator ausgebildet sein.

Während Fig. 2b das Bedrucken des Körpers 233 des Vorformlings zeigt, kann auch vorgesehen sein, dass das Gewinde des Vorformlings mit der Komponente 250 ausgestattet/bedruckt wird. Ebenso kann die Komponente auf der Innenseite des Gewindes (die innerhalb des Vorformlings liegt) aufgebracht sein. Gerade mit dieser Ausführungsform sind Beschädigungen der Komponente in weiteren Behandlungsschritten unwahrscheinlich, sodass die Komponente möglichst über die gesamte Behandlung des Vorformlings/Behälters intakt bleibt. Beim Bedrucken der Innenseite des Behälters werden bevorzugt Materialien oder Kombinationen von Materialien verwendet, die nicht wasserlöslich (oder allgemein nicht löslich in dem Produkt sind, das in den aus dem Vorformling hergestellten Behälter gefüllt wird) sind. Um dies zu erreichen, kann auf die aufgebrachte Komponente auch eine Schutzschicht aufgebracht werden, die unlöslich in dem Produkt, das in den Behälter eingefüllt wird, ist. Je nach Beständigkeit dieser Schutzschicht ist es damit nicht nötig, die Komponente vor der Auslieferung der Behälter an den Kunden (und damit im Herstellungsprozess spätestens unmittelbar vor dem Verschließen des Behälters) zu entfernen.

In einer Ausführungsform kann vorgesehen sein, dass die Druckmaschine stromab einer Vorformlingzuführung, die Vorformlinge weiteren Behälterbehandlungsmaschine beispielsweise ungeordnet zugeführt, angeordnet ist. Insbesondere kann die Druckmaschine stromab dieser Zuführung, aber stromauf einer weiteren Behälterbehandlungsmaschine, in der die Vorformlinge in irgendeiner Weise behandelt werden, angeordnet sein. Die weitere Behälterbehandlungsmaschine kann entweder eine Maschine sein, die tatsächlich irgendeine Eigenschaft des Vorformlings/Behälters verändert oder Produkt in diesen füllt, oder es kann sich um eine Transporteinrichtung handeln. Auch eine Kombination dieser Ausführungen ist denkbar. Beispielsweise eine Behälterbehandlungsmaschine mit integrierten Transfersternen.

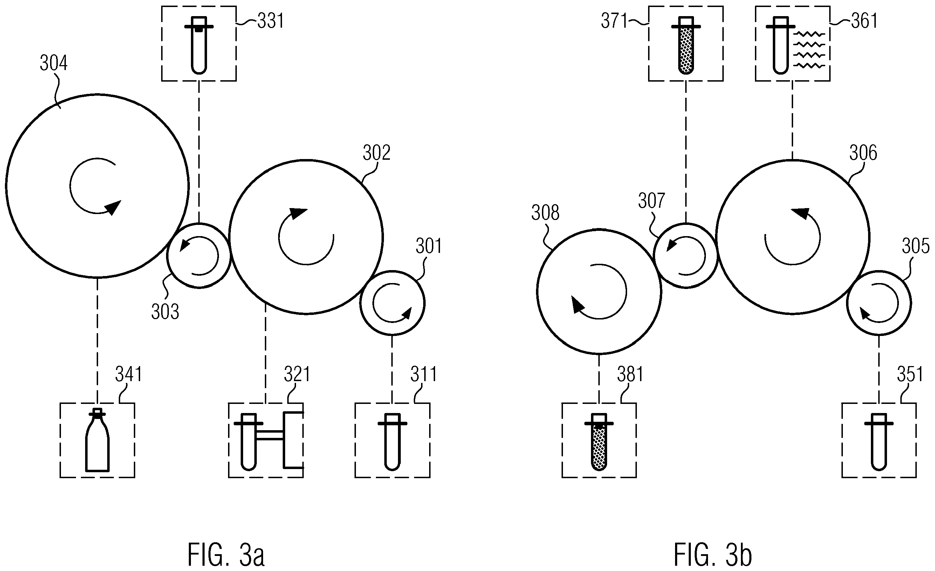

Mögliche Ausführungsformen hinsichtlich der Anordnung der Druckmaschine werden in den Figuren 3a und 3b beschrieben. Während die Druckmaschine und die weitere Behälterbehandlungsmaschine in den Figuren 3a und 3b als voneinander getrennte Maschinen, die über geeignete Transporteinrichtungen miteinander verbunden sind, dargestellt sind, kann die Druckmaschine auch in eine betreffende Behälterbehandlungsmaschine integriert sein. Insbesondere kann die Druckmaschine stromauf oder stromab eines Behandlungsabschnitts der Behälterbehandlungsmaschine in der Behälterbehandlungsmaschine angeordnet sein. Handelt es sich bei der Behälterbehandlungsmaschine beispielsweise um eine Blasformmaschine, so kann die Druckmaschine in der Blasformmaschine bzw. an der Peripherie der Blasformmaschine derart angeordnet sein, dass Vorformlinge die Druckmaschine passieren und die Komponente auf die Vorformlinge aufgedruckt wird, bevor sie zu Behältern ausgeformt werden.

In Figur 3a ist eine Ausführungsform dargestellt, in der die Druckmaschine 302 stromauf einer weiteren Behälterbehandlungsmaschine, in diesem Fall eine Blasformmaschine, angeordnet ist. Der Druckmaschine werden die Vorformlinge über eine Transporteinrichtung, beispielsweise einen Transferstern 301, zugeführt. Die Vorformlinge sind entsprechend der Darstellung 311 noch unbehandelt und können beispielsweise direkt aus einer Vorformlingzuführung stammen. In der Druckmaschine 302 wird die Komponente des elektronischen Bauteils mit dem Druckmodul, wie dies mit Bezug auf Figur 1 beschrieben wurde, aufgebracht. Dies wird schematisch durch die Abbildung 321 angedeutet.

Der mit der Komponente versehene Vorformling 331 kann aus der Druckmaschine dann an eine weitere Transporteinrichtung 303, die ebenfalls als Transferstern ausgebildet sein kann, übergeben werden. Dabei sind Transporteinrichtungen 303 bevorzugt, die während des Transportes des Vorformlings nicht mit der auf ihn aufgedruckten Komponente in Kontakt kommen. Wird die Komponente beispielsweise entsprechend der Figur 2a auf die Oberfläche des Tragrings des Vorformlings aufgebracht, so kann vorgesehen sein, dass der Vorformling in der Transporteinrichtung 303 im Neckhandling-Verfahren weitertransportiert wird. Bei diesem Verfahren wird der Vorformling von einer Klammer im Bereich des Tragrings auf der vom Kopfbereich des Vorformlings wegweisenden Seite umgriffen. Da die Komponente gemäß Figur 2a auf der zum Kopfbereich weisenden Seite des Tragrings aufgedruckt ist, berührt die Klammer beim Transport des Vorformlings im Neckhandling-Verfahren die Komponente nicht, sodass Beschädigungen vermieden werden können.

Von der Transporteinrichtung 303 wird der Vorformling dann an die Behälterbehandlungsmaschine 304 übergeben, die hier als Blasformmaschine ausgebildet ist. Der Vorformling wird dann beispielsweise an eine schließbare Form übergeben und zu einem Behälter ausgeformt. Dies erfolgt üblicherweise bei Temperaturen zwischen 50 und 120 °C. Dabei wird der Körper des Vorformlings zum Behälter ausgeformt, wie dies mit 341 angedeutet ist. Da die Komponente des elektronischen Bauteils in einem Bereich des Vorformlings aufgedruckt wurde, der beim Ausformen des Vorformlings zu einem Behälter eine möglichst geringe Verformung, bevorzugt keine Verformung, erfährt, ist die Komponente des elektronischen Bauteils auch nach dem Ausformen noch funktionsfähig.

Alternativ zur Blasformmaschine oder zusätzlich können stromab der Druckmaschine 302 weitere Behälterbehandlungsmaschinen vorgesehen sein. In jedem Fall ist es bevorzugt, wenn der Transport des Vorformlings und/oder des Behälters und das Aufdrucken der Komponente so erfolgen, dass die nachfolgenden Transporteinrichtungen die Komponente des elektronischen Bauteils nicht berühren, um Beschädigungen der Komponente zu vermeiden.

Figur 3b zeigt eine alternative Ausführungsform, bei der der Vorformling (zunächst unbehandelt 351) von einer Transporteinrichtung 305 an eine erste Behälterbehandlungsmaschine 306 übergeben wird. In dieser wird der Vorformling zunächst behandelt 361. Dabei kann der Vorformling beispielsweise beschichtet werden. Auch andere Behandlungen des Vorformlings sind denkbar. So kann eine Behandlung derart erfolgen, dass die Benetzbarkeit mit der für die Komponente verwendete Drucktinte oder die Hafteigenschaften der Oberfläche des Vorformling hinsichtlich der Drucktinte, mit der die Komponente aufgebracht wird, verändert, insbesondere gegenüber der unbehandelten Oberfläche verbessert werden.

Anschließend wird der behandelte Vorformling 371 an eine weitere Transporteinrichtung 307 übergeben, die den Vorformling schließlich der Druckmaschine 308 zuführt, in der die Komponente des elektronischen Bauteils auf den Vorformling aufgedruckt wird 381.

In der Ausführungsform gemäß Figur 3b können sämtliche Behälterbehandlungsmaschinen zum Einsatz kommen, die den Vorformling behandeln, ihnen jedoch bevorzugt noch nicht zu einem vollständigen Behälter ausformen.

Wie bereits oben erwähnt, kann die Komponente, die auf den Vorformling aufgebracht wird, insbesondere einen Speicher umfassen. Weiterhin kann die auf den Vorformling aufgebrachte Komponente oder das aufgebrachte elektronische Bauteil, wie ein RFID-Transponder, eine Antenne umfassen, wobei beide Komponenten derart miteinander verbunden sein können, dass von der Antenne empfangenen Signale in dem Speicher abgespeichert werden können. Ebenso kann vorgesehen sein, wenn ein Auslesen des Speichers durch geeignete Lesegeräte, die beispielsweise an Behälterbehandlungsmaschine angeordnet sein können, mit Hilfe der Antenne möglich ist.

Im ersten Fall, in dem Daten in dem Speicher gespeichert werden, kann vorgesehen sein, dass jede Behälterbehandlungsmaschine von der Antenne empfangbare Signale aussendet, die zumindest einen Parameter, der für die Behandlung des Vorformlings und/oder des Behälters indikativ ist, kodieren. Dieser Parameter kann dann in dem Speicher der Komponente auf dem Vorformling gespeichert werden (beispielsweise magnetisch). Später kann dieser Speicher ausgelesen werden, um beispielsweise die Behandlung des Vorformlings und/oder des Behälters nach zu verfolgen.

Alternativ oder in Kombination dazu können in dem Speicher gespeicherte Daten von Behälterbehandlungsmaschinen ausgelesen werden. Jeder Behälterbehandlungsmaschine kann dazu ein geeignetes Lesegerät zugeordnet sein. Bevorzugt ist ein solches Lesegerät in jeder Behälterbehandlungsstation der Behälterbehandlungsmaschine angeordnet und ausgebildet, nur Daten eines in die entsprechenden Behälterbehandlungsstationen übergebenen Vorformlings auszulesen. Diese Daten können dann an eine Steuereinheit übermittelt werden, die die Behandlung in der betreffenden Behälterbehandlungsstation steuert.

Beispielsweise kann eine erste Behälterbehandlungsmaschine Daten in dem Speicher speichern. Dies kann beispielsweise über wenigstens ein Sendegerät, das Daten in Form elektromagnetischer Wellen oder akustischer Wellen an den Speicher oder eine diesem zugeordnete Antenne/Empfangseinheit der Komponente bzw. des elektronischen Bauteils auf dem Vorformling/Behälter überträgt, erfolgen. An der Behälterbehandlungsmaschine kann ein einziges Sendegerät angeordnet sein. Es kann auch vorgesehen sein, dass in jeder Behälterbehandlungsstation der Behälterbehandlungsmaschine ein Sendegerät angeordnet ist, bzw. ein Sendegerät jeder Behälterbehandlungsstation zugeordnet ist. Eine stromab der ersten Behälterbehandlungsmaschine angeordnete, zweite Behälterbehandlungsmaschine kann diese Daten auslesen. Das Auslesen kann über ein geeignetes Lesegerät, das insbesondere zum kontaktlosen Auslesen der Daten aus dem Speicher geeignet ist, erfolgen. Auch hier kann vorgesehen sein, dass entweder nur ein Lesegerät der zweiten Behälterbehandlungsmaschine zugeordnet ist bzw. an dieser angeordnet ist, oder dass in jeder Behälterbehandlungsstation ein Lesegerät angeordnet ist, bzw. dieser zugeordnet ist. Basierend auf den ausgelesenen Daten können dann bestimmte Prozessparameter der zweiten Behälterbehandlungsmaschine eingestellt werden. Die Behandlung der Vorformlinge und/oder Behälter kann so individualisiert werden. Nicht alle abgespeicherte Daten müssen den ablaufenden Produktionsablauf beeinflussen, sondern können allein oder in Kombination mit weiteren Daten auch oder nur zur Sammlung von Informationen dienen, welche beispielsweise bei der Lieferung benötigt werden oder dem Endnutzer rein zur Information dienen können. So kann eine erste Gruppe von Daten für die Steuerung/Regelung/Überwachung der Behälterbehandlung genutzt werden, während eine zweite Gruppen von Daten, die auch in einem physisch von dem Speicher, in dem die erste Gruppe von Daten gespeichert ist, getrennten Speicher der Komponente/des elektronischen Bauteils gespeichert werden können, allein der Dokumentation dienen und als Information einem Endnutzer oder Abnehmer zur Verfügung stehen.

Ferner kann der Speicher der Komponente bereits nach dem Aufdrucken oder während des Aufdruckens auf den Vorformling so manipuliert werden (beispielsweise durch kodieren mit einem Magneten), dass in dem Speicher Daten gespeichert werden, die indikativ für die weitere Behandlung des Vorformlings sind. Zwar können zusätzlich durch die nachfolgenden Behälterbehandlungsmaschinen weitere Daten in dem Speicher gespeichert werden, dies ist jedoch nicht zwingend. Die so in dem Speicher gespeicherten Daten können die anzuwendenden Prozessparameter für die gesamte weitere Behandlung des Behälters bzw. Vorformlings definieren.

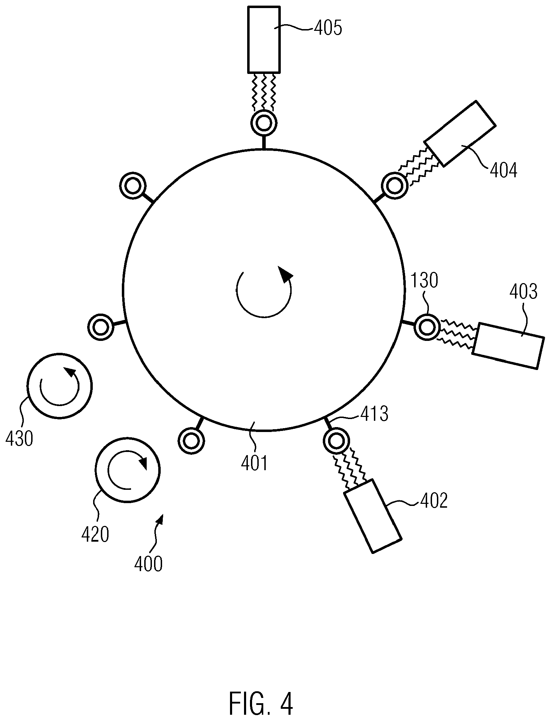

Figur 4 zeigt eine weitere Ausführungsform einer Druckmaschine 400 zum Bedrucken von Vorformlingen. Auch in dieser Ausführungsform ist die Druckmaschine 400 als Rundläufermaschine umfassend ein Karussell 401 ausgebildet. Alternative Ausführungsformen der Druckmaschine, beispielsweise als lineare arbeitende Maschine sind ebenso denkbar. Vorformlinge werden dem Karussell über eine geeignete Transporteinrichtung 420, wie einen Transferstern, zugeführt. Dabei werden die Vorformlinge beispielsweise an geeignete Aufnahmen 413 übergeben, die an der Peripherie des Karussells 401 angeordnet sind. Nach der Behandlung der Vorformlinge 130 in der Druckmaschine 400 können diese über eine geeignete Transporteinrichtung 430 aus der Druckmaschine abtransportiert und gegebenenfalls weiteren Behandlungsschritten/Behälterbehandlungsmaschinen zugeführt werden. Wie bereits oben beschrieben, kann die Druckmaschine 400 unmittelbar stromab einer Vorformlingzuführung angeordnet sein.

Gemäß dieser Ausführungsform sind mehrere Druckmodule vorgesehen, um die Oberfläche des Vorformlings zu bedrucken. In Rotationsrichtung des Karussells kann ein erstes Druckmodul 402 vorgesehen sein, um eine Basisschicht auf den Vorformling 130 aufzubringen. Diese Basisschicht kann insbesondere in dem Bereich auf den Vorformling aufgebracht werden, in dem nachfolgend die Komponente des elektronischen Bauteils aufgebracht werden soll. Die Basisschicht kann beispielsweise Materialien umfassen, die die Haftung der Komponente an der Oberfläche des Vorformlings verbessern. Die Basisschicht wirkt in diesem Fall als Vermittlerschicht, so dass die Komponente nicht unmittelbar auf die Oberfläche des Vorformlings gedruckt wird, sondern auf die Basisschicht. Da es sich bei der aufgedruckten Komponente um ein elektronisches Bauteil oder zumindest eine Komponente eines elektronischen Bauteils handelt, ist es bevorzugt, wenn die Basisschicht einen durchgängigen, lückenlosen Film zumindest in dem Bereich des Vorformlings, auf den die Komponente aufgedruckt wird, bildet. Das Druckmodul 402 kann daher vorteilhaft beispielsweise als Walze ausgebildet sein, die besagte Basisschicht auf den Vorformling aufbringt. Aber auch Sprüheinrichtungen oder digitale Druckmodule sind denkbar, sofern ein kontinuierlicher Film aufgebracht werden kann.

In Rotation nach dem Druckmodul 402 ist ein Druckmodul 403 vorgesehen, dass ausgebildet ist, die Komponente auf den Vorformling aufzudrucken. Dabei ist hier schematisch nur ein Druckmodul dargestellt. Es können auch mehrere Druckmodule zum Einsatz kommen, um die Komponente auf den Vorformling bzw. die möglicherweise vorgesehene Basisschicht aufzudrucken.

In Rotationsrichtung des Karussells 401 nach dem Druckmodul 403 kann ein weiteres Druckmodul 404 angeordnet sein, das eine Deckschicht auf den Vorformling, zumindest jedoch auf den Bereich des Vorformlings, auf den die Komponente aufgedruckt wurde, aufbringen kann. Diese Deckschicht kann auf eine Fläche aufgebracht werden, die die Gesamtfläche der Komponente enthält und größer als diese ist, sodass die Deckschicht die Komponente vollständig einschließt. So kann der Rand der Deckschicht zum Rand der Komponente einen Abstand von 1mm aufweisen. Die Deckschicht kann zum einen gewährleisten, dass die Komponente auf dem Vorformling oder der Basisschicht noch besser haftet. Dazu kann die Deckschicht mit der Oberfläche des Vorformlings oder mit der Basisschicht eine Verbindung eingehen, die stärker ist als die Verbindung der Komponente mit der Oberfläche des Vorformlings oder der Basisschicht. Weiterhin kann die Deckschicht Materialien umfassen, die die Komponente vor Umwelteinflüssen schützen. So kann die Deckschicht undurchlässig für Wasser und/oder andere Flüssigkeiten sein. Ferner kann die Deckschicht Barriereeigenschaften aufweisen, die ein Hineindiffundieren von Sauerstoff oder anderen oxidierenden Stoffen verhindern.

In Rotationsrichtung nach dem Druckmodul 404 ist ein weiteres Modul 405 dargestellt, das als Trocknungseinheit ausgebildet sein kann. Dazu kann das Modul 405 beispielsweise einen oder mehrere Infrarotstrahler aufweisen, die den Vorformling, insbesondere die auf ihn aufgebrachte Drucktinte, trocknen können. Alternativ oder zusätzlich können auch Warmluftstrahler vorgesehen sein, die ein Trocknen der aufgebrachten Tinten mit einem Strom warmer Luft bewirken, wie auch UV-Vorrichtungen, die die aufgebrachten Tinten aushärten können, indem sie diese mit UV-Strahlung bestrahlen.

Während die Trocknungseinheit 405 in Rotationsrichtung des Karussells 401 nach dem letzten Druckmodul 404 vorgesehen ist, kann auch zwischen den einzelnen Druckmodulen 402 und 403 sowie 403 und 404 jeweils eine Trocknungseinheit vorgesehen sein, um die zuvor aufgebrachten Drucktinten zu trocknen. Ferner sind die Druckmodule 403 bis 404 und die Trocknungseinheit 405 außerhalb des Karussells angeordnet. Es kann auch vorgesehen sein, dass die entsprechenden Module zusammen mit den Aufnahmen 413 als Behandlungseinheiten für Vorformlinge vorgesehen sind. Dies bedeutet, dass jeder Aufnahme am Karussell 401 entsprechende Module zugeordnet sind, die sich mit dem Karussell 401 und der Aufnahme 413 mit bewegen.

## Patentansprüche

1. Druckmaschine (100) zum Bedrucken von Vorformlingen (130) in der getränkeverarbeitenden Industrie, wobei die Druckmaschine (100) ein Druckmodul (101) umfasst, das ausgebildet ist, wenigstens eine Komponente (131) eines elektronischen Bauteils auf eine Oberfläche des Vorformlings im Bereich des Tragrings des Vorformlings aufzudrucken, wobei die Komponente (250) auf die Oberfläche des Tragrings (232) und/oder auf einen Bereich, der sich unterhalb des Tragrings (232) höchstens 1cm in Richtung des Bodens des Vorformlings erstreckt, und/oder das Gewinde des Vorformlings aufgebracht wird.

2. Druckmaschine (100) nach Anspruch 1, wobei das Druckmodul (101) ausgebildet ist, die Komponente (131) mittels kontaktlosem Druck, Kontaktdruck oder einer Kombination aufzubringen.

3. Druckmaschine (100) nach Anspruch 1 oder 2, wobei die Druckmaschine zum Drucken der Komponente wenigstens ein digitales Druckmodul, ein Siebdruck-Modul, ein Flexodruck-Modul, ein Roll-to-Roll-Druckmodul oder ein Inkjet-Druckmodul umfasst.

4. Druckmaschine (302) nach einem der Ansprüche 1 bis 3, wobei die Druckmaschine Teil einer Behälterbehandlungsmaschine (304) mit einem Behandlungsabschnitt, in dem Vorformlinge behandelt werden können, ist.

5. Druckmaschine (302) nach Anspruch 4, wobei die Druckmaschine stromab oder stromauf des Behandlungsabschnitts angeordnet ist.

6. Druckmaschine (302) nach Anspruch 4 oder 5, wobei die Behälterbehandlungsmaschine als Vorformlingzuführung ausgebildet ist, die Vorformlinge bereitstellt.

7. Druckmaschine (400) nach einem der Ansprüche 1 bis 6, wobei stromab des Druckmoduls (403) eine Trocknungseinheit (405) zum Trocknen aufgebrachter Drucktinte und/oder stromauf des Druckmoduls (403) ein Druckmodul (402) zum Aufbringen einer Basisschicht zumindest im Bereich der Komponente auf den Vorformling und/oder stromab des Druckmoduls (403) ein Druckmodul (404) zum Aufbringen einer Deckschicht zumindest im Bereich der Komponente auf den Vorformling angeordnet ist.

8. Verfahren zum Behandeln eines Vorformlings (130) in der getränkeverarbeitenden Industrie, wobei eine Komponente (131) eines elektronischen Bauteils durch eine Druckmaschine (100) auf die Oberfläche des Behälters im Bereich des Tragrings (232) des Vorformlings aufgebracht wird, wobei die Komponente (250) auf die Oberfläche des Tragrings (232) und/oder auf einen Bereich, der sich unterhalb des Tragrings (232) höchstens 1cm in Richtung des Bodens des Vorformlings erstreckt, und/oder das Gewinde des Vorformlings aufgebracht wird.

9. Verfahren nach Anspruch 8, wobei die Komponente (250) durch kontaktlosen Druck oder Kontaktdruck oder eine Kombination dieser auf den Behälter aufgebracht wird.

10. Verfahren nach einem der Ansprüche 8 bis 9, wobei der Vorformling vor oder nach dem Aufbringen der Komponente wenigstens einen weiteren Behandlungsschritt durchläuft.

11. Verfahren nach Anspruch 10, wobei der weitere Behandlungsschritt eines von Blasformen, Formfüllen, Füllen, Etikettieren, mit einem Druckbild bedrucken, verschließen, verpacken umfasst.

12. Verfahren nach einem der Ansprüche 8 bis 11, wobei die Komponente wenigstens eine Antenne, einen Chip, einen Speicher oder eine Diode umfasst.

13. Verfahren nach einem der Ansprüche 8 bis 12, wobei die Komponente (250) einen Speicher umfasst und in dem Speicher auslesbare Daten gespeichert sind, die weitere, an dem Vorformling (130) durchzuführende Behandlungsschritte definieren.

14. Verfahren nach einem der Ansprüche 8 bis 13, wobei die Komponente (250) einen Speicher umfasst und in dem Speicher während und/oder nach wenigstens einem weiteren Behandlungsschritt, der an dem Vorformling (130) durchgeführt wird, Daten gespeichert werden, die indikativ für wenigstens einen Prozessparameter während des Behandlungsschritts sind.

## Claims

1. Printing machine (100) for printing preforms (130) in the beverage processing industry, wherein the printing machine (100) comprises a printing module (101) which is designed to imprint at least one component (131) of an electronic part onto a surface of the preform in the region of the support ring of the preform, wherein the component (250) is applied to the surface of the support ring (232), and/or to a region that extends at most 1 cm below the support ring (232) in the direction of the base of the preform, and/or to the thread of the preform.

2. Printing machine (100) according to claim 1, wherein the printing module (101) is designed to apply the component (131) by means of non-contact printing, contact printing, or a combination thereof.

3. Printing machine (100) according to either claim 1 or claim 2, wherein the printing machine for printing the component comprises at least one digital printing module, screen printing module, flexographic printing module, roll-to-roll printing module or inkjet printing module.

4. Printing machine (302) according to any of claims 1 to 3, wherein the printing machine is part of a container treatment machine (304) that has a treatment portion in which preforms can be treated.

5. Printing machine (302) according to claim 4, wherein the printing machine is arranged downstream or upstream of the treatment portion.

6. Printing machine (302) according to either claim 4 or claim 5, wherein the container treatment machine is designed as a preform feeder which provides preforms.

7. Printing machine (400) according to any of claims 1 to 6, wherein a drying unit (405) for drying applied printing ink is arranged downstream of the printing module (403), and/or a printing module (402) for applying a base layer to the preform, at least in the region of the component, is arranged upstream of the printing module (403), and/or a printing module (404) for applying a cover layer to the preform, at least in the region of the component, is arranged downstream of the printing module (403).

8. Method for treating a preform (130) in the beverage processing industry, wherein a component (131) of an electronic part is applied by a printing machine (100) to the surface of the container in the region of the support ring (232) of the preform, wherein the component (250) is applied to the surface of the support ring (232), and/or to a region that extends at most 1 cm below the support ring (232) in the direction of the base of the preform, and/or to the thread of the preform.

9. Method according to claim 8, wherein the component (250) is applied to the container by means of non-contact printing or contact printing, or a combination thereof.

10. Method according to either claim 8 or claim 9, wherein the preform undergoes at least one further treatment step before or after the component is applied.

11. Method according to claim 10, wherein the further treatment step comprises one of blow moulding, mould filling, filling, labelling, printing with a printed image, sealing, and packaging.

12. Method according to any of claims 8 to 11, wherein the component comprises at least one antenna, chip, memory or diode.

13. Method according to any of claims 8 to 12, wherein the component (250) comprises a memory, and readable data which define further treatment steps to be carried out on the preform (130) are stored in the memory.

14. Method according to any of claims 8 to 13, wherein the component (250) comprises a memory and, during and/or after at least one further treatment step that is carried out on the preform (130), data which are indicative of at least one process parameter during the treatment step are stored in the memory.

## Revendications

1. Machine d'impression (100) pour l'impression de préformes (130) dans l'industrie de transformation des boissons, la machine d'impression (100) comprenant un module d'impression (101) qui est conçu pour imprimer au moins un composant (131) d'un composant électronique sur une surface du préforme dans la zone de l'anneau de support du préforme, dans lequel le composant (250) est appliqué sur la surface de la bague d'appui (232) et/ou sur une zone s'étendant sous la bague d'appui (232) sur 1 cm au maximum en direction du fond du préforme et/ou du fil du préforme.

2. Machine d'impression (100) de la revendication 1, dans laquelle le module d'impression (101) est configuré pour appliquer le composant (131) en utilisant une impression sans contact, une impression avec contact, ou une combinaison.

3. Machine d'impression (100) selon les revendications 1 ou 2, dans laquelle la machine d'impression pour l'impression du composant comprend au moins un module d'impression numérique, un module de sérigraphie, un module d'impression flexographique, un module d'impression rouleau à rouleau et un module d'impression à jet d'encre.

4. Machine d'impression (302) selon l'une quelconque des revendications 1 à 3, dans laquelle la machine d'impression fait partie d'une machine de traitement de récipients (304) ayant une section de traitement dans laquelle les préformes peuvent être traitées.

5. Machine d'impression (302) selon la revendication 4, dans laquelle la machine d'impression est disposée en aval ou en amont de la section de traitement.

6. Machine d'impression (302) selon la revendication 4 ou 5, dans laquelle la machine de manutention des récipients est configurée comme un chargeur de préformes fournissant des préformes.

7. Machine d'impression (400) selon l'une quelconque des revendications 1 à 6, dans laquelle en aval du module d'impression (403) se trouve une unité de séchage (405) pour sécher l'encre d'impression appliquée et/ou en amont du module d'impression (403) se trouve un module d'impression (402) pour appliquer une couche de base au moins dans la zone du composant sur le préforme et/ou en aval du module d'impression (403) se trouve un module d'impression (404) pour appliquer une couche de finition au moins dans la zone du composant sur le préforme.

8. Procédé de traitement d'un préforme (130) dans l'industrie de transformation des boissons, dans lequel un composant (131) d'un composant électronique est appliqué par une machine à imprimer (100) sur la surface du récipient dans la zone de la bague d'appui (232) de la préforme, le composant (250) étant appliqué sur la surface de la bague d'appui (232) et/ou sur une zone s'étendant au-dessous de la bague d'appui (232) sur 1 cm au maximum en direction du fond du préforme et/ou du filetage du préforme.

9. Procédé selon la revendication 8, dans lequel le composant (250) est appliqué sur le récipient par une pression sans contact ou une pression avec contact ou une combinaison des deux.

10. Procédé selon l'une des revendications 8 à 9, dans lequel le préforme subit au moins une autre étape de traitement avant ou après l'application du composant.

11. Procédé selon la revendication 10, dans lequel l'étape de traitement supplémentaire comprend l'une des étapes suivantes: moulage par soufflage, remplissage du moule, remplissage, étiquetage, impression d'une image imprimée, scellage, emballage.

12. Procédé selon l'une quelconque des revendications 8 à 11, dans lequel le composant comprend au moins l'un des éléments suivants: une antenne, une puce, une mémoire ou une diode.

13. Procédé selon l'une quelconque des revendications 8 à 12, dans lequel le composant (250) comprend une mémoire et la mémoire stocke des données lisibles définissant les étapes de traitement ultérieures à effectuer sur le préforme (130).

14. Procédé selon l'une quelconque des revendications 8 à 13, dans lequel le composant (250) comprend une mémoire et dans la mémoire, pendant et/ou après au moins une étape de traitement supplémentaire effectuée sur le préforme (130), des données indicatives d'au moins un paramètre du processus pendant l'étape de traitement sont stockées.
